Europäisches Patentamt

European Patent Office

Office européen des brevets

(19)

(11) Publication number: **0 140 378**
A2

# (12) EUROPEAN PATENT APPLICATION

(21) Application number: 84113100.6

(22) Date of filing: 31.10.84

(51) Int. Cl.⁴: **D 01 F 6/70**
D 01 F 1/10, C 08 K 5/00
//(C08K5/00, 5:32, 5:52)

(30) Priority: 31.10.83 US 547383

(43) Date of publication of application:
08.05.85 Bulletin 85/19

(84) Designated Contracting States:
BE DE FR GB IT

(71) Applicant: E.I. DU PONT DE NEMOURS AND COMPANY
1007 Market Street
Wilmington Delaware 19898(US)

(72) Inventor: Lewis, William
2714 Marklyn Drive
Wilmington Delaware 19803(US)

(74) Representative: Abitz, Walter, Dr.-Ing. et al,
Abitz, Morf, Gritschneder, Freiherr von Wittgenstein
Postfach 86 01 09
D-8000 München 86(DE)

(54) Discoloration-resistant spandex fiber.

(57) Increased resistance to discoloration induced by smog is imparted to a spandex fiber by the incorporation therein of a combination of a benzyl-substituted hydroxylamine and an organophosphite.

EP 0 140 378 A2

Croydon Printing Company Ltd.

## DISCOLORATION-RESISTANT SPANDEX FIBER

This invention relates to a spandex fiber which has increased resistance to smog-induced discoloration.  In particular, the invention concerns such fibers to which improved smog-resistance is imparted by a combination of additives which includes a benzyl-substituted hydroxylamine and an organophosphite.

Spandex fibers are well known in the art. The fibers are formed from long chain synthetic polymer comprising at least 85 percent segmented polyurethane.  Such fibers, especially those formed with aromatic diisocyanates, are known to discolor on prolonged exposure to atmospheric smog.

Many agents have been suggested in the art for combatting the spandex-fiber discoloration problem.  Among these agents are benzyl-substituted hydroxylamines, such as dibenzyl hydroxylamine, disclosed in Wei, U.S. Patent 3,926,909.  Although benzyl-substituted hydroxylamines have been found useful in offering some protection to spandex fibers against smog-induced discoloration, further improvements in discoloration resistance would enhance the utility of the fibers.

Organophosphite additives are known per se for stabilizing polyurethanes, as, for example, from the disclosures of Friedman, et al, U.S. Patent 3,641,218, Larrison, U.S. Patent 3,419,524 and Japanese Patent Application Publication 23253/74. Also, organophosphite additives have been disclosed for use in combination with phenolic antioxidants for stabilizing spandex fibers, for example, in Bell, et al, U.S. Patent 3,386,942 and Megna, et al, U.S. Patent 3,573,251.

In seeking a solution to the above-described smog-induced discoloration problem, the present inventor found that when benzyl-substituted hydroxylamines and organophosphites are used together as additives in spandex fibers, the resistance of the fibers to smog-induced discoloration is unexpectedly enhanced to an extent which is greater than one would have expected from the effects of each of the additives alone. Thus, the present invention provides a spandex fiber which has dispersed within it a combination of additives which includes a benzyl-substituted hydroxylamine and an organophosphite in amounts that are effective in increasing the resistance of the fiber to smog-induced discoloration. The effective amount of each of the hydroxylamine and the organophosphite is usually in the range of 1/2 to 5 percent, but preferably from 1 to 3 percent, by weight of the fiber. The benzyl-substituted hydroxylamine may be a monobenzylhydroxylamine, a dibenzylhydroxylamine, or a polymeric benzyl-substituted hydroxylamine. N,N-dibenzylhydroxylamine, N,N-bis(2,4,6-trimethylbenzyl)hydroxylamine and poly(m-xylylenehydroxylamine) are preferred hydroxylamine additives. The organophosphites may be monomeric or polymeric. Decaphenyl heptakis(dipropylene glycol) octaphosphite, tetraphenyl dipropylene glycol diphosphite and distearyl pentaerythritol diphosphite are preferred organophosphite additives.

As used herein, the term fibers includes staple fibers and/or continuous filaments. The term benzyl-substituted hydroxylamine, as used herein, is limited to N-benzyl-substituted hydroxylamines.

In accordance with the present invention the effective amounts of the benzyl-substituted hydroxylamine and of the organophosphite can vary over a fairly broad range. The term effective amounts, as used herein, means the amounts of benzyl-substituted hydroxylamine and organophosphite dispersed in the spandex polymer which provide fiber made from that polymer with a resistance to smog-induced discoloration that is much greater than one would have obtained by using either additive alone, or than one would have expected using the two in combination. For the purposes of this invention, the SCAT-exposure test, described hereinafter, provides a convenient measure of what is meant by effective amounts. A spandex fiber is considered herein to contain effective amounts of benzyl-substituted hydroxylamine and of organophosphite, when a spandex fiber containing the combination exhibits a change in "b" value (i.e., a "$\Delta b$") in a SCAT-exposure test which is less than 2/3 that exhibited by such fibers containing only one of the ingredients of the combination.

Generally, the lower practical limit for the concentration of each of these additives is determined by a variety of factors, including the particular composition of the spandex polymer and the amount of discoloration that may be acceptable, and is usually about 1/2 percent by weight of the spandex polymer in the fiber. The practical upper limit for the concentration of these additives is usually no more than about 5 percent because of cost considerations and possible detrimental effects on fiber properties. The preferred concentration for these additives is usually in the range of about 1 to 3 percent by weight of the spandex polymer. The weight ratio of benzyl-substituted hydroxylamine to organophosphite in the effective additive combinations also may vary over a fairly broad range.  Usually this ratio is in the range of 0.2:1 to 1.2:1, and preferably, 0.3:1 to 0.7:1.

Benzyl-substituted hydroxylamines that are suitable for use in the present invention include monobenzylhydroxylamines and symmetrical and unsymmetrical dibenzylhydroxylamines known in the art from, for example, Wei, U.S. Patent 3,926,909, as well as polymeric forms of the benzyl-substituted hydroxylamines.  The benzyl portion and/or hydroxylamine portions of the benzyl-substituted hydroxylamine may be substituted, so long as the substituents do not detrimentally affect the color or other properties of the spandex fiber.  In particular, substituents such as those disclosed in U.S. Patent 3,926,909 (e.g., alkyl, halogen, aryl, etc.) usually are suitable.  Examples of specific benzyl-substituted hydroxylamines that are suitable for use in the present invention include N,N-dibenzylhydroxylamine, N-monobenzylhydroxylamine, N,N-bis(2,4,6-trimethylbenzyl)hydroxylamine, poly(m-xylylenehydroxylamine), N,N-bis(4-dodecylbenzyl)hydroxylamine, N,N-bis(4-chlorobenzyl)hydroxylamine, N,N-bis(2,6-dimethyl-4-t-butyl-3-hydroxybenzyl)-hydroxylamine, N,N-bis(3,5-dichloro-4-acetoxybenzyl)-hydroxylamine, N-(4-ethoxybenzyl)-N-benzylhydroxylamine, the polymer from hexamethylene diisocyanate and N,N-bis(4-hydroxybenzyl)hydroxylamine, and the like.  The preferred hydroxylamines are N,N-dibenzylhydroxylamine, N,N-bis(2,4,6-trimethylbenzyl)hydroxylamine and poly(m-xylylenehydroxylamine).

To prepare the benzyl-substituted hydroxylamine additives for use in the present invention, the starting material is usually hydroxylamine hydrochloride, but other conventional methods can be used. A convenient method for preparing symmetrical benzyl-substituted hydroxylamines is to react the desired benzyl halide with hydroxylamine at reflux in glyme solvent (i.e., ethylene glycol dimethyl ether) in the presence of sodium carbonate or bicarbonate. The reaction mixture is then partitioned between ether and water and the desired hydroxylamine product is obtained by evaporation of the ether fraction.

Organophosphites suitable for use in the present invention include monophosphites, diphosphites and polyphosphites known in the art, as for example from U.S. Patents 3,419,524 and 3,641,218 and Japanese Patent Application Publication 23253/74. The group attached to each of the three oxygen atoms attached to each phosphorus atom of the organophosphite may be the same or different and may be hydrogen, alkyl of one to 18 carbon atoms, or phenyl, provided that no more than one of the three groups is hydrogen. The attached groups may contain additional nondetrimental substituents. Among specific phosphites suitable for use in the present invention are triphenyl phosphite, diphenyl isodecyl phosphite, octylphenyl diisooctyl phosphite, trilauryl phosphite, distearyl pentaerythritol diphosphite, bis(2,4-di-t-butylphenyl) pentaerythritol diphosphite, tetraphenyl dipropylene glycol diphosphite, decaphenyl heptakis(dipropylene glycol) octaphosphite, decakis(nonylphenyl) heptakis(dipropylene glycol) octaphosphite, tris(nonylphenyl) phosphite, tris (2,4-di-t-butylphenyl) phosphite, 4-chlorophenyl dibenzyl phosphite, etc. The preferred organophosphites are decaphenyl heptakis(dipropylene glycol) octaphosphite, tetraphenyl dipropylene glycol diphosphite and distearyl pentaerythritol diphosphite.

To prepare the phosphite additives for use in the present invention, the starting material is usually triphenyl phosphite or phosphorus trichloride. A convenient way to make many monophosphites is to react triphenyl phosphite with an alcohol or mixture of alcohols in the presence of a catalyst. Similarly, to make polyphosphites, triphenyl phosphite may be reacted with an appropriate glycol or mixture of glycols by procedures similar to those disclosed in U.S. Patent 3,419,524.

In making spandex fibers according to the present invention, a solution of a long chain synthetic polymer comprising at least 85 percent segmented polyurethane is prepared and spun through orifices into filaments. While dry spinning is preferred, wet spinning or reaction spinning can be used. An effective amount of both a benzyl-substituted hydroxylamine and an organophosphite, along with any other desired additives is dispersed in the polymer at any of several points in the processing sequence. Usually, this is accomplished by dissolving or dispersing the additives in the spin mixture upstream of the orifices.

As indicated above, the improved spandex fibers of the present invention are made from segmented polyurethane polymers, such as those based on polyethers, polyesters, polyetheresters and the like. Such fibers are prepared by well-known methods, such as those described in U.S. Patents 2,929,804, 3,097,192, 3,428,711, 3,553,290 and 3,555,115.

In addition to the benzyl-substituted hydroxylamines and organophosphite additives described above, the spandex fibers of the invention may contain a variety of additives for different purposes, such as delustrants, additional antioxidants, dyes, dye enhancers, U.V. stabilizers, additives for chlorine resistance, pigments, etc. so long as such additives do not produce antagonistic effects with the combination of additives of the invention. Also, when finishing or dyeing yarns or fabrics made from fibers of the invention, care must be exercised to avoid deactivating or extracting the additives.

The following test procedures are used for measuring the performance of spandex fibers of the present invention.

Discoloration of test samples is determined as a change in "b" value, which is measured by means of a differential colorimeter (e.g., a model D-25-3 Differential Colorimeter manufactured by Hunter Associates Laboratory, Inc., Reston, Virginia) which has been calibrated against the manufacturer's standard reference plates. For these measurements, the test sample is a sample of yarn, wound under low tension on an aluminum plate measuring 3 inches by 4 inches by 1/16 inch (7.6 x 10.6 x 0.16 cm) to form a layer of about 1/8-inch (0.32-cm) thickness.

The test for smog discoloration is carried out by exposing the above-described test samples in a 200-liter laboratory test chamber, to a synthetic gaseous mixture made up of about seven parts per million (ppm) nitrogen dioxide, seven ppm sulfur dioxide, and forty-six ppm 2-pentene in air at a total flow of 5.8 liters per minute, while irradiating the samples with eight "daylight" and four "black" fluorescent tubes (e.g., type F30T8 and F30T8BL manufactured by General Electric Co.). This exposure has been found to correlate with end-use performance in smoggy atmospheres, such as are encountered in the city of Los Angeles, California. For the results reported herein, the samples were exposed for 16 to 40 hours in a Scott Controlled Atmospheric Tester (SCAT). The SCAT unit is described in greater detail in Technical Information Bulletin L-33 (issued by the Textile Fibers Department Technical Service Section of E. I. du Pont de Nemours and Company, Inc., Wilmington, Delaware). Before exposure in the SCAT chamber, the samples are heated at 92-95°C for 30 min. in tap water containing sufficient phosphoric acid to adjust the pH to 5.0 $\pm$ 0.1. This treatment simulates the hot, wet finishing treatment that fabrics containing spandex yarns receive in the trade. The samples are then rinsed and dried for about 16 hours in a ventilated hood.

For each SCAT and Los Angeles exposure test, "b" values of the sample are measured before and after exposure. The difference in "b" values before and after exposure is reported as " b" in the examples below. Because of variability in the exposure conditions of the SCAT exposure tests, a control or comparison sample is always exposed simultaneously with the test samples to provide a convenient way to compare the results from one test batch to another.

The invention is illustrated further, but is not intended to be limited by the following examples in which all percentages, unless otherwise specified, are by total weight of the fibers (without finish). The various additives used in the yarns of the examples, the abbreviated designations and their chemical compositions are summarized in Table 1 below. In the examples, each yarn of the invention and each comparison yarn contain TiO$_2$ and UMB in concentrations of 5% and 0.01%, respectively. Yarns of the invention are designated with capital letters; comparison yarns, with Arabic numerals. Each Example demonstrates the surprisingly large improvement in discoloration resistance that is imparted to spandex fibers by incorporating into the fibers an effective amount of the combination of additives of the present invention.

## TABLE I

### ADDITIVES USED IN EXAMPLES

| Designation | Chemical Description* |
|---|---|
| A. Benzyl-substituted hydroxylamines | |
| DBHA | N,N-dibenzylhydroxylamine |
| BTMBHA | N,N-bis(2,4,6-trimethylbenzyl)-hydroxylamine |
| PXHA | poly(m-xylylene)hydroxylamine |
| B. Organophosphites | |
| Weston® DHOP | decaphenyl heptakis(dipropylene glycol) octaphosphite |
| Weston® THOP | tetraphenyl dipropylene glycol diphosphite |
| Weston® DPDP | diphenyl isodecyl phosphite |
| Weston® 618 | distearyl pentaerythritol diphosphite |
| Weston® 494 | diisooctyl octaphenyl phosphite |
| TPP | triphenyl phosphite |
| Ultranox® 626 | bis(2,4-di-t-butylphenyl) pentaerythritol diphosphite |
| C. Others | |
| TiO$_2$ | rutile titanium oxide pigment |
| UMB | ultramarine blue pigment |

*Weston® and Ultranox® additives are manufactured by Borg-Warner Chemicals Co., Parkersburg, West Virginia and UMB is sold by Ricketts, Ltd., North Humberside, England.

## EXAMPLE I

This Example illustrates a preferred embodiment of the invention and demonstrates the greatly superior discoloration resistance exhibited by a spandex yarn containing a combination of a preferred benzyl-substituted hydroxylamine additive and a preferred polymeric organophosphite additive in accordance with the present invention as compared to identical spandex yarns except for (1) the absence of the hydroxylamine additive or (2) the absence of the organophosphite additive.

A solution of segmented polyurethane in N,N-dimethylacetamide was prepared in accordance with the general procedure described in U.S. Patent 3,428,711 (e.g., first sentence of Example II and the description of Example I). An intimate mixture was prepared of p,p'-methylenediphenyl diisocyanate and polytetramethylene ether glycol (of about 1800 molecular weight) in a molar ratio of 1.70 and was held at 80 to 90°C for 90 to 100 minutes to yield an isocyanate-terminated polyether (i.e., a capped glycol), which was then cooled to 60°C and mixed with N,N-dimethylacetamide to provide a mixture containing about 45% solids. Then, while maintaining vigorous mixing, the capped glycol was reacted for 2 to 3 minutes at a temperature of about 75°C with N,N-dimethylacetamide solutions of diethylamine and 1,3-cyclohexylenediamine chain extenders. The molar ratio of diamine chain extender to diethylamine was 6.31 and the molar ratio of diamine chain extenders to unreacted isocyanate in the capped glycol was 0.948. The resultant solution of segmented

polyurethane contained approximately 36% solids and had a viscosity of about 2100 poises at 40°C. This polymer had an intrinsic viscosity of 0.95, measured at 25°C in N,N-dimethylacetamide at a concentration of 0.5 gram per 100 ml of solution.

To the resultant viscous polymer solution were added decaphenyl heptakis(dipropylene glycol) octaphosphite (i.e., Weston® DHOP), N,N-dibenzylhydroxylamine (DBHA), rutile $TiO_2$, and ultramarine blue pigment (UMB) which respectively amounted to 1.5, 1.0, 5.0 and 0.01 percent based on the weight of the final spandex fiber without finish.

The above-described mixture was then dry spun through orifices in a conventional manner to form 10-filament, 140-denier (156-dtex) yarn. A surface-lubricating finish of 91% polydimethylsiloxane, 5% polyamylsiloxane and 4% magnesium stearate was applied to the yarn. The yarn was then wound on a plastic-coated cardboard tube and designated Yarn A in the Table below.

Two comparison yarns were also made in the same way as Yarn A, except that in comparison Yarn 1, the polyphosphite was omitted, and in comparison Yarn 2, the N,N-dibenzylhydroxylamine was omitted.

The three yarns were then subjected to synthetic smog for 16 hours in accordance with the SCAT-exposure test procedure described above. Samples of the yarns were also exposed to atmospheric smog for eight weeks in Los Angeles, California. The discoloration of the yarns in these tests was as follows:

12

TABLE II

| | Yarn | Comparison Yarns | |
|---|---|---|---|
| | A | 1 | 2 |
| **Additives** | | | |
| DBHA | 1.0 | 1.0 | 0 |
| DHOP | 1.5 | 0 | 1.5 |
| **Discoloration, Δb** | | | |
| SCAT-Test | 3.2 | 14.3 | 25.8 |
| Los Angeles | 2.2 | 6.3 | 3.7 |

These results show the ability of the combination of an organophosphite and a benzyl-substituted hydroxylamine in accordance with the present invention to protect a spandex yarn from discoloration. In contrast to the excellent performance of Yarn A of the invention, the comparison yarns from which either the organophosphite or the benzylhydroxylamine had been omitted exhibited much greater and highly undesirable discoloration. Note that in the SCAT test, the comparison yarns discolored 2-1/2 to 4-1/2 times as many "Δb" units as Yarn A of the invention. The Los Angeles test confirmed the large advantage of the yarns of the invention over the comparison yarns.

Two additional preferred embodiments of the invention were prepared in accordance with the procedures described above for Yarn A, except that the 1.5% of Weston® DHOP in Yarn A was replaced by an equal weight of two other organophosphites; namely, Weston® THOP in Yarn B and Weston® 618 in Yarn C. Yarns B and C were exposed in the same SCAT and Los Angeles tests as Yarn A. The discoloration values (i.e., Δb) that resulted from these exposures are summarized in Table III.

## TABLE III

| Yarn | Phosphite Additive | Discoloration, b | |
|------|--------------------|------|-------------|
| | | SCAT | Los Angeles |
| A | 1.5% Weston® DHOP | 3.2 | 2.2 |
| B | 1.5% Weston® THOP | 2.5 | 2.6 |
| C | 1.5% Weston® 618 | 2.1 | 3.4 |

Yarns B and C showed substantially the same strong resistance to discoloration that Yarn A did.

## EXAMPLE II

This example demonstrates the excellent discoloration resistance of spandex yarns having different benzyl-substituted hydroxylamines along with a preferred organophosphite in accordance with the invention.

The procedures of Example I for making Yarn A were repeated except that the organophosphite and benzyl-substituted hydroxylamine were not the same as in Yarn A. The concentrations and particular phosphites and hydroxylamines that were used in the three yarns of the invention and in the two comparison yarns that were made this way, and their performance in 40-hour SCAT and 8-week Los Angeles exposure tests, are summarized in Table IV.

14

## TABLE IV

| | Yarns of Invention | | | Comparison Yarns | |
|---|---|---|---|---|---|
| | D | E | F | 3 | 4 |
| **Additives:** | | | | | |
| Weston® DHOP, % | 2.0 | 2.0 | 2.0 | 2.0 | 0 |
| DBHA, % | 1.5 | 0 | 0 | 0 | 0 |
| BTMBHA, % | 0 | 1.5 | 0 | 0 | 0 |
| PXHA, % | 0 | 0 | 1.5 | 0 | 1.5 |
| **Discoloration, Δb:** | | | | | |
| SCAT test | 1.0 | 0.9 | 3.6 | 13.1 | 17.6 |
| Los Angeles | 3.9 | 3.2 | 4.3 | 13.5 | 15.8 |

Note that Yarns 3 and 4 which contained either the same organophosphite or the same benzyl-substituted hydroxylamine as Yarn F discolored between 3.6 and 4.9 times as many Δb units as Yarn F.

## EXAMPLE III

Four more yarns of the invention and two more comparison yarns were made in the same manner as Yarn A of Example I except that once again (as in Example II) the organophosphite and benzyl-substituted hydroxylamine were not the same as in Yarn A. The particular phosphite and hydroxylamine additives that were used and their concentrations are shown in Table V along with the performance of the yarns in a 16-hour SCAT exposure test and an 8-week exposure to atmospheric smog in Los Angeles. Yarns G, H, I and J of the invention and Comparison Yarn 5 each contained 1% of DBHA. The Yarns of the invention each contained 1.5% of a different organophosphite. Comparison Yarn 5 contained no phosphite. Comparison Yarn 6 contained neither a phosphite nor a benzyl-substituted hydroxylamine.

## TABLE V

| | Yarns of Invention | | | | Comparison Yarns | |
|---|---|---|---|---|---|---|
| | G | H | I | J | 5 | 6 |
| Additives, % | | | | | | |
| DBHA | 1.0 | 1.0 | 1.0 | 1.0 | 1.0 | 0 |
| TPP | 1.5 | 0 | 0 | 0 | 0 | 0 |
| Weston® 494 | 0 | 1.5 | 0 | 0 | 0 | 0 |
| Ultranox® 626 | 0 | 0 | 1.5 | 0 | 0 | 0 |
| Weston® DPDP | 0 | 0 | 0 | 1.5 | 0 | 0 |
| Discoloration, $\Delta b$ | | | | | | |
| SCAT test | 8.4 | 11.0 | 11.7 | 10.3 | 18.2 | 30.6 |
| Los Angeles | 7.3 | 7.6 | 4.9 | 3.9 | 11.5 | 12.0 |

These results again showed the unexpectedly good resistance of the spandex yarns of the invention to smog-induced discoloration.

I CLAIM:

1. A spandex fiber having dispersed therein a combination of additives, characterized by a combination that includes an N-benzyl-substituted hydroxylamine and an organophosphite in amounts effective for increasing the resistance of the fiber to smog-induced discoloration.

2. The spandex fiber of Claim 1 characterized in that the effective amounts of the hydroxylamine and the phosphite are each in the range of 1/2 to 5 percent by weight of the spandex fiber.

3. The spandex fiber of Claim 2 characterized in that the range is from 1 to 3 percent.

4. The spandex fiber of Claim 1 characterized in that the benzyl-substituted hydroxylamine is selected from the group consisting of monobenzylhydroxylamines, dibenzylhydroxylamines and polymeric benzylhydroxylamines.

5. The spandex fiber of Claim 4 characterized in that the hydroxylamine is N,N-dibenzylhydroxylamine.

6. The spandex fiber of Claim 4 characterized in that the hydroxylamine is N,N-bis(2,4,6-trimethylbenzyl)hydroxylamine.

7. The spandex fiber of Claim 4 characterized in that the hydroxylamine is poly(m-xylylenehydroxylamine).

8. The spandex fiber of Claim 1 characterized in that the organophosphite is decaphenyl heptakis(dipropylene glycol) octaphosphite.

9. The spandex fiber of Claim 1 characterized in that the organophosphite is tetraphenyl dipropylene glycol diphosphite.

10. The spandex fiber of Claim 1 characterized in that the organophosphite is distearyl pentaerythritol diphosphite.